Europäisches Patentamt

European Patent Office

Office européen des brevets

(11) Numéro de publication : **0 474 557 A1**

(12) **DEMANDE DE BREVET EUROPEEN**

(21) Numéro de dépôt : **91402367.6**

(51) Int. Cl.$^5$ : **B23K 26/14**

(22) Date de dépôt : **04.09.91**

(30) Priorité : **07.09.90 FR 9011119**

(43) Date de publication de la demande :
**11.03.92 Bulletin 92/11**

(84) Etats contractants désignés :
**BE CH DE ES FR GB IT LI SE**

(71) Demandeur : **COMMISSARIAT A L'ENERGIE
ATOMIQUE
31-33, rue de la Fédération
F-75015 Paris (FR)**

(72) Inventeur : **Bouilly, Philippe
121 Avenue Jules Vallès
F-91200 Athis-Mons (FR)**
Inventeur : **Bourgault, François
16 Avenue de la Gare
F-91760 Itteville (FR)**

(74) Mandataire : **Mongrédien, André et al
c/o BREVATOME 25, rue de Ponthieu
F-75008 Paris (FR)**

(54) **Laser utilisé pour des usinages de pièces mécaniques.**

(57)    Laser muni d'un système de soufflage de gaz composé de deux tubes concentriques (36, 39). Le tube interne projette un gaz neutre vers une zone à protéger, telle qu'un bain de fusion, et le tube externe projette le même gaz à une plus faible vitesse. Ce gaz projeté n'entraîne donc que du gaz environant de même composition.
L'invention s'applique au soudage ou au découpage de pièces au laser.

EP 0 474 557 A1

FIG.1

L'invention concerne un laser utilisé pour des usinages de pièces mécaniques et qui est utilisable pour souder des pièces ou les découper.

L'aménagement fondamental du laser selon l'invention est un système pour souffler du gaz devant la buse dont le rayon lumineux sort. Ce système est avantageusement relié à la tête de laser par une structure déformable, afin de s'adapter à des conditions d'usinage variées et notamment à des porte-buse de longueurs différentes. Le système de soufflage est constitué de deux conduits concentriques, le conduit externe soufflant du gaz à plus faible débit ou à plus faible vitesse que le conduit interne. Le gaz éjecté par le conduit interne, qui joue le rôle prépondérant, entraîne alors du gaz de même composition ou de propriétés analogues originaire du conduit externe, ce qui empêche toute oxydation de la zone de la pièce qui reçoit le soufflage et évite de devoir travailler dans une enceinte d'atmosphère neutre. Le plasma produit par la grande énergie du rayon lumineux et qui pourrait l'absorber est de plus dispersé.

La tête du laser est normalement munie d'une lentille de focalisation. Il est avantageux de concevoir une structure qui permette le déplacement de la lentille suivant l'axe du rayon lumineux, par rapport au porte-buse. On peut enfin prévoir un cadre intercalé entre le porte-buse et une telle lentille et qui porte une plaque transparente de protection de la lentille. Ce cadre est avantageusement formé de deux parties séparables qui maintiennent la plaque de protection entre eux. Le remplacement de ces plaques, qui sont fréquemment atteintes par des projections diverses, est alors aisé.

On va maintenant décrire l'invention plus en détail à l'aide des figures suivantes annexées à titre illustratif et non limitatif :
- la figure 1 est une vue d'ensemble de l'appareil ;
- la figure 2 est une vue selon la coupe II-II de la figure 1 ;
- la figure 3 est une vue suivant la coupe III-III de la figure 1 ;
- et la figure 4 illustre le système de soufflage.

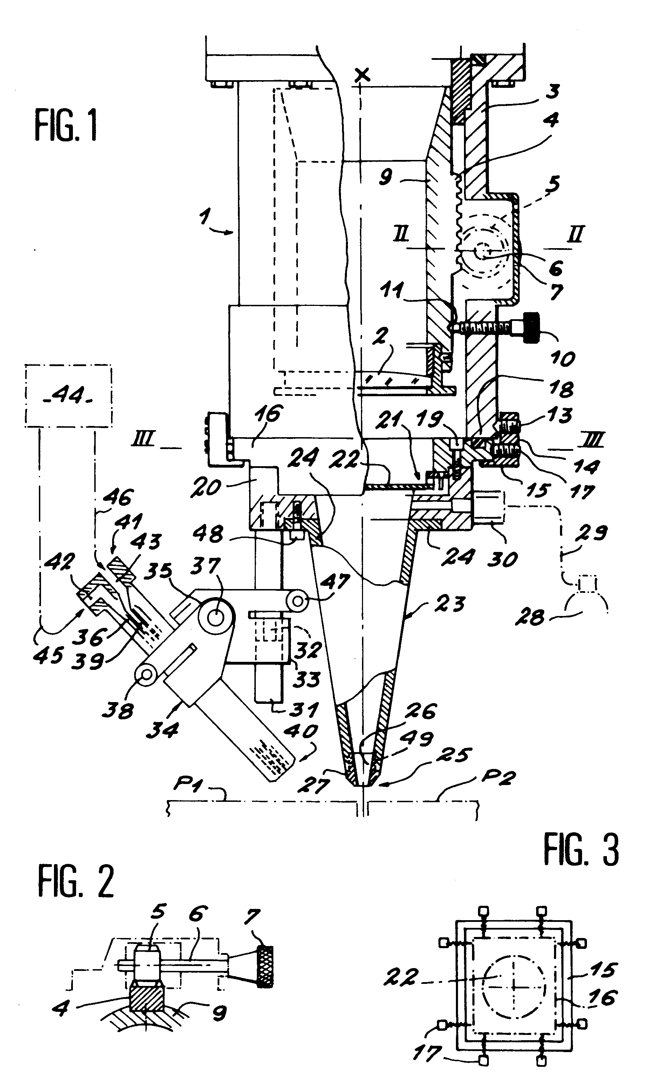

La tête de laser est généralement référencée par 1. Elle comporte une paroi 3 cylindrique dans laquelle un tube 9 coulisse. Le tube 9 porte une lentille de focalisation 2 du rayon lumineux produit par le laser ainsi qu'une crémaillère 4 orientée parallèlement à l'axe X du rayon lumineux. Un pignon 5 lié à la paroi 3 engrène dans la crémaillère 4. Comme on le voit également sur la figure 2, le pignon 5 est entraîné par un axe 6 libre de tourner dans la paroi 3. Une poignée moletée 7 permet de tourner l'axe 6 pour faire coulisser le tube 9 et déplacer la lentille de focalisation 2. Il est possible de réaliser un blocage à une ou plusieurs positions privilégiées du tube 9 en faisant pénétrer l'extrémité de vis 10 dans des perçages 11 du tube 9 ;

les vis 10 sont par ailleurs engagées par filetage à travers la paroi 3.

La paroi 3 est munie à sa partie inférieure d'empreintes coniques dans lesquelles s'enfoncent les extrémités en picot de vis 13 d'une bague 14 qui comporte une collerette interne 15 de support établie sur sa face inférieure. Un cadre supérieur 16 est maintenu entre la collerette interne 15 et la face d'extrémité de la paroi 3 et centré au moyen de vis de pression 17 engagées dans des taraudages radiaux de la bague 14. La déformation d'un joint torique d'étanchéité 18 entre le cadre supérieur 16 et l'extrémité libre de la paroi 3 absorbe le jeu entre ces deux pièces. Des vis de fixation 19 unissent le cadre supérieur 16 à un cadre inférieur 20. Les deux cadres 16 et 20 sont constitués de façon à délimiter une fois assemblés une gorge interne dans laquelle un support 21 d'une lame de protection 22 transparente peut être coincé. La lame de protection 22 s'étend devant la lentille 2. La figure 3 offre une autre vue de ces pièces.

Un porte-buse 23 a une forme de cône creux et son extrémité élargie se termine par une bride 24 qu'il est possible d'introduire dans une cuvette de centrage du cadre inférieur 20 avant de la visser au cadre inférieur 20 par des vis 48. L'extrémité amincie du porte-buse 23 porte une buse 25 qui lui est vissée grâce à une partie filetée 49 et dont la paroi interne 26 canalise un gaz éventuel qui est soufflé vers l'extérieur du laser pour purger le porte-buse 23 des fumées ; la buse 25 comprend également une surface externe moletée 27 qui est saisie pour dévisser la buse 25 du porte-buse 23 et la remplacer une fois qu'elle est usée par de la corrosion ou des attaques consécutives à des projections de matière. La longueur du porte-buse 23 est choisie pour s'accorder à la longueur de focalisation de la lentille 2. Le porte-buse 23 peut être remplacé à chaque opération ou à chaque sortie d'usinage, ainsi d'ailleurs que la buse 25 si elle est inadaptée ou usée.

Le système de soufflage de gaz peut être produit par une bouteille 28 reliée par un tuyau souple 29 à un embout 30 ménage au travers du cadre inférieur 20. Le gaz s'écoule donc à l'intérieur du porte-buse 23 vers la buse 25.

Il est nécessaire dans nombre d'applications de souffler du gaz sur le bain de fusion afin d'éviter des oxydations et de disperser le plasma produit par l'énergie du laser. Il est pour cela impossible de souffler par le porte-buse 23 avec de bons résultats. On choisit de souffler obliquement vers le joint des pièces P1 et P2 à souder, près duquel la buse 25 a été descendue et que le cordon de soudure doit emplir. Le système de soufflage comporte tout d'abord une tige 31 parallèle à l'axe X et vissée sur le cadre inférieur 20. La tige 31 porte une crémaillère 32. Un support intermédiaire 33 muni en particulier d'une bague glissant sur la tige 31 et d'un système à pignon d'engrènement sur la crémaillère 32 permettent, de la même façon que pour la paroi 3 et le tube 9, de régler et de bloquer à des valeurs souhaitées la position du support intermédiaire 33 sur la tige 31. Un collier 47 établi sur le support intermédiaire 33 permet de bloquer celui-ci à une hauteur voulue sur la tige 31.

Le support intermédiaire 33 est relié à une bague de support 34 par une articulation 35 afin de pouvoir incliner un tube externe 36 apte à coulisser dans la bague de support 34 par rapport à l'axe X. L'articulation 35 peut être bloquée par une vis de blocage 37 qui serre la bague de support 34 contre le support intermédiaire 33, et le tube externe 36 est entouré par un collier de serrage 38 qui appartient à la bague de support 34 et peut coincer le tube externe 36 à une position déterminée.

Le tube externe 36 contient un tube interne 39 qui lui est concentrique. Les tubes 36 et 39 sont ouverts à une extrémité d'éjection 40 dirigée vers la buse 25 et fermés à l'autre extrémité par un bouchon 41. Le bouchon 41 est traversé par deux conduits 42, 43 qui relient respectivement l'intérieur du tube externe 36, hors du tube interne 39, et l'intérieur du tube interne 39 à une bouteille de gaz neutre 44 tel que l'argon ou l'hélium par des canalisations 45 et 46 munies de vannes, de détendeurs ou d'autres appareils analogues pour modifier les caractéristiques de l'écoulement gazeux. On fait en sorte que le gaz issu du tube interne 39 soit projeté vers la buse 25 et le bain de fusion et que le gaz originaire du tube externe 36 sorte à plus faible vitesse ou à plus faible débit. Ce gaz n'a pas d'action de soufflage mais crée une atmosphère neutre et relativement stagnante autour du courant de gaz du tube interne 39 qui n'entraîne donc pas d'oxygène vers le bain de fusion.

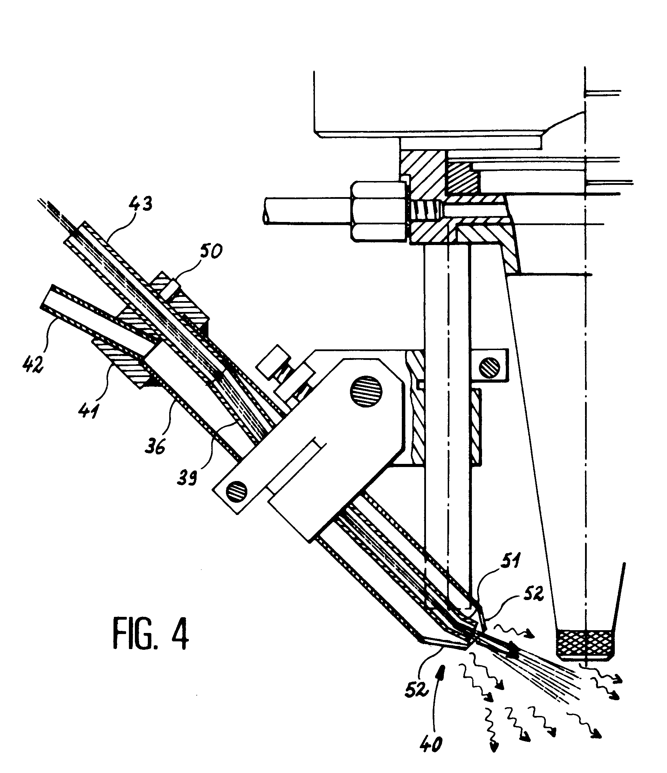

La figure 4 montre plus précisément la construction du système de soufflage. Le conduit 42 est solidaire du bouchon 41 alors que le conduit 43 est solidaire du tube interne 39 et le prolonge ; il coulisse par ailleurs dans le bouchon 41, auquel il peut être fixé par une vis de pression 50, ce qui permet de le remplacer. On peut en effet préférer certaines formes de tubes internes 39. Si la distance latérale de l'extrémité d'éjection 40 au joint à souder doit rester importante, on peut alors recourir à un tube interne 39 dont l'extrémité opposée au conduit 43 est recourbée et forme un coude 51, de sorte que le gaz est envoyé dans une bonne direction. Le bord d'éjection du tube externe 36 peut par ailleurs être biseauté, c'est-à-dire pourvu de parti es échancrées 52, ce qui facilite l'étalement du panache de gaz soufflé dans le tube externe 36.

Une autre façon de travailler consiste à orienter le coude 51 dans l'autre sens, c'est-à-dire pour rendre le jet de gaz presque vertical, ce qui est utile pour les pièces épaisses soudées par de puissants lasers. Le gaz pénètre alors profondément entre les lèvres des pièces P1 et P2, ce qui permet de produire des soudures saines de 7 mm de profondeur par exemple.

Les tubes 36 et 39 peuvent avoir typiquement 15 mm et 3 mm de diamètre, et les débits de gaz peuvent être de quelques dizaines de litres à la minute. Les gaz passant dans les deux tubes peuvent aussi être différents.

Tous les éléments décrits de cette réalisation de l'invention ne sont pas systématiquement indispensables. Ils peuvent être omis dans certains cas ou certaines circonstances.

## Revendications

1. Laser utilisé pour des usinages de pièces mécaniques (P1, P2) et présentant une tête munie d'une buse (25) entourant un rayon lumineux, caractérisé en ce qu'il comprend un système pour souffler du gaz constitué de deux conduits concentriques (36, 39), le conduit externe (36) soufflant du gaz à plus faible vitesse ou à plus faible débit que le conduit interne (39).

2. Laser selon La revendication 1, caractérisé en ce que le système pour souffler du gaz est relié à la tête par une structure déformable (31, 33, 34).

3. Laser selon La revendication 1 ou 2, caractérisé en ce qu'il comprend un porte-buse (23) en forme d'enveloppe présentant une extrémité amincie de support de la buse (25) et une extrémité élargie portant des moyens démontables (48) d'attache sur la tête.

4. Laser selon La revendication 3, caractérisé en ce que la buse (25) est vissée sur le porte-buse (23).

5. Laser selon La revendication 4, caractérisé en ce que la buse comprend une surface extérieure (27) de préhension.

6. Laser selon l'une quelconque des revendications 3 à 5, caractérisé en ce qu'il comprend un cadre (16, 20) intercalé entre le porte-buse (23) et une lentille (2) située dans la tête, le cadre étant porteur d'une plaque transparente (22) de protection de la lentille (2).

7. Laser selon La revendication 6, caractérisé en ce que le cadre est formé de deux parties séparables (16, 20) qui maintiennent la plaque de protection entre elles.

8. Laser selon L'une quelconque des revendications 1 à 7, caractérisé en ce que la tête est munie d'une lentille de focalisation (2) et d'un dispositif permettant de déplacer la lentille (2) par rapport au porte-buse (23) suivant L'axe du rayon lumineux.

9. Laser selon L'une quelconque des revendications 3 à 7, caractérisé en ce qu'il comprend un autre dispositif de soufflage de gaz (28, 29, 30), à travers le porte-buse (23).

10. Laser selon l'une quelconque des revendications 1 à 9, caractérisé en ce que le conduit interne a une extrémité d'éjection recourbée (51).

11. Laser selon l'une quelconque des revendications 1 à 10, caractérisé en ce que le conduit externe a un bord d'éjection biseauté (52).

FIG. 1

FIG. 2

FIG. 3

FIG. 4

Office européen
des brevets

**RAPPORT DE RECHERCHE EUROPEENNE**

Numero ae la demande

EP 91 40 2367

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | PATENT ABSTRACTS OF JAPAN vol. 13, no. 305 (M-849)(3653), 13 juillet 1989; & JP - A - 1095890 (MITSUBISHI HEAVY IND LTD) 13.04.1989 * le document en entier * | 1 | B 23 K 26/14 |
| Y | idem | 3-7 | |
| A | PATENT ABSTRACTS OF JAPAN vol. 13, no. 258 (M-838)(3606), 15 juin 1989; & JP - A - 1062295 (MITSUBISHI ELECTRIC CORP) 08.03.1989 * le document en entier * | 2 | |
| Y | PATENT ABSTRACTS OF JAPAN vol. 10, no. 187 (M-493)(2243), 2 juillet 1986; & JP - A - 61030295 (MATSUSHITA ELECTRIC IND CO LTD) 12.02.1986 * le document en entier * | 3-7 | |
| Y | PATENT ABSTRACTS OF JAPAN vol. 11, no. 50 (M-562), 17 février 1987; & JP - A - 6121495 (SONY CORP) 20.09.1986 * le document en entier * | 3-7 | DOMAINES TECHNIQUES RECHERCHES (Int. Cl.5) B 23 K |
| A | DE-A-3 814 074 (C. BAASEL LASERTECHNIK GMBH) * revendication 6 * | 8 | |
| A | PATENT ABSTRACTS OF JAPAN vol. 10, no. 261 (M-514)(2317), 5 septembre 1986; & JP - A - 61086090 (HITACHI ZOSEN CORP) 01.05.1986 | 9 | |

Le présent rapport a été établi pour toutes les revendications

| Lieu de la recherche | Date d'achèvement de la recherche | Examinateur |
|---|---|---|
| BERLIN | 06-12-1991 | WUNDERLICH J E |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)